(19) Europäisches Patentamt
European Patent Office
Office européen des brevets

(11) Publication number: **0 267 576 B1**

# (12) EUROPEAN PATENT SPECIFICATION

(45) Date of publication of patent specification: **27.05.92**

(51) Int. Cl.[5]: **C08F 10/00**, C08F 4/64

(21) Application number: **87116588.2**

(22) Date of filing: **10.11.87**

## (54) Components and catalysts for the polymerization of alpha-olefins to stereoregular polymers having narrow molecular weight distribution.

(30) Priority: **10.11.86 IT 2226286**

(43) Date of publication of application:
**18.05.88 Bulletin 88/20**

(45) Publication of the grant of the patent:
**27.05.92 Bulletin 92/22**

(84) Designated Contracting States:
**AT BE DE ES FR GB IT NL SE**

(56) References cited:
**EP-A- 0 106 141**
**US-A- 3 859 231**

**CHEMICAL ABSTRACTS, vol. 92, no. 4, January 1980, page 26, abstract no. 23174y, Columbus, Ohio, US**

(73) Proprietor: **Himont Incorporated**
**Three Little Falls Centre 2801 Centerville Road P.O. Box 15439**
**Wilmington Delaware 19850-5439(US)**

(72) Inventor: **Barbe, Pier Camillo**
**3, via Pavone**
**I-44100 Ferrara(IT)**
Inventor: **Albizzati, Enrico**
**64, via Roma**
**I-28041 Arona, Novara(IT)**
Inventor: **Giannini, Umberto**
**53, via Sismondi**
**I-20133 Milan(IT)**
Inventor: **Baruzzi, Giovanni**
**37, via Mario Azzi**
**I-44100 Ferrara(IT)**
Inventor: **Noristi, Luciano**
**21, via Beata Lucia da Narni**
**I-44100 Ferrara(IT)**

(74) Representative: **Zumstein, Fritz, Dr. et al**
**Dr. F. Zumstein Dipl.-Ing. F. Klingseisen**
**Bräuhausstrasse 4**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 267 576 B1

## Description

This invention relates to new components of catalysts suitable for the stereoregular (co)polymerization of alpha olefins $CH_2=CHR$, where R is an alkyl or aryl group having from 1 to 8 carbon atoms, in particular propylene, and to the catalysts therefrom.

It is known to polymerize propylene with catalysts obtained by reaction of an Al-alkyl compound, an electron donor compound with a solid component comprising a titanium compound and an electron donor compound supported on a Mg halide in active form. Examples of said catalyst systems are described in French patents No. 2332288 and 2361423, U.S. patents No. 4156063, 4107413, 4107414, 4187196, and 4336360 and in European published patent applications No. 45975, 45976, and 45977, all in the name of the Applicant.

The above described supported catalysts even though endowed of high activity and stereospecificity bring about propylene polymers having a relatively broad molecular weight distribution (MWD) characterized by values of $Mw/_{Mn}$ higher than 5, measured by gel permeation cromatography (G.P.C.).

For some important applications, particularly in the field of the injection molding, polymers are required having improved physical-mechanical properties as flexural rigidity, impact resistance and resistance to thermal distortion. All the above mentioned properties are strictly connected with a narrow MWD.

The objective of a narrow MWD ($Mw/_{Mn}$ of about 3.5) is presently achieved, in the industrial practice, by subjecting polypropylene obtained with the use of $MgCl_2$ - supported catalysts to thermal degradation with peroxides, carried out in practice by adding peroxides during the extrusion of polymer. The thermal degradation process is however highly onerous, both from the viewpoint of the high consumption of energy and the difficulty of controlling the process (possibility of reproducing the results).

It has been now unexpectedly found that stereoregular polymers and copolymers of alpha-olefins having narrow MWD ($Mw/_{Mn}$ <4) are obtained if the (co)polymerization of the alpha-olefins is carried out with stereospecific catalysts supported on Mg halides in active form in which, as solid component the product is used obtained by reacting a solid catalyst-forming component comprising a Ti-halide or a Ti haloalcoholate, and optionally an electron donor compound supported on the Mg-halide in the active form with an organic compound (AH) containing at least an active hydrogen atom, in a liquid medium having a dielectric constant higher than 2, measured at 20°C.

The AH compound is used in amounts corresponding to molar ratios Mg/moles of AH compound comprised between 2 and 30 and preferably between 5 and 10.

Suitable and preferred AH compounds are the aliphatic alcohols, particularly the $C_2$ - $C_8$ alcohols, as for example ethanol, 1-butanol, 2-methyl-1-propanol; the cycloaliphatic alcohols. Phenols, also ortho-substituted, as 4-tertbutylphenol, p-cresol, $\beta$-naphtol and 2,6-ditertbutyl-p-cresol (BHT) are also suitable compounds.

The most preferred compounds are ethanol and butanol.

Useful AH compounds are also amines, the carboxylic acids also containing heteroatoms, amides, glycols and acetylacetone.

Specific examples of said compounds are trifluoromethane-sulphonic acid and ethylene glycol.

The reaction medium having dielectric constant higher than 2 at 20°C preferably is an organic halogenated compound. Specific examples are 1,2-dichloroethane, methyl chloride, chlorobenzene, chloroform, bromoform, methyl bromide, o-dichlorobenzene and benzyl chloride.

The reaction medium has not to be reactive towards the solid component or the other components of the catalyst.

Suitable Ti-compounds containing at least a Ti-halogen bond include the Ti halides, as $TiCl_4$, $TiCl_3$, and the Ti-haloalcoholates.

$TiCl_4$ is the preferred compound.

Briefly, the catalysts of this invention comprise the product of reaction of a) a solid component comprising a Ti-halide or Ti-haloalcholate and optionally an electron-donor compound, subjected to the reaction conditions as set forth above, with b) an Al-alkyl compound and c) an electron-donor compound.

The electron donor compound (c) and the one employed in the preparation of component (a) are organic compounds containing one or more atoms of oxygen, sulphur, prosphorus and nitrogen.

Such compounds include esters of oxygenated acids, halides of acids, ketones, aldehydes, alcohols, esters, thioethers, amides, lactones, phosphines, phosphamides, silicon compounds as silanes and siloxanes, heterocyclic compounds containing at least a nitrogen atom.

Specific examples of useful esters are the alkyl esters of aromatic mono or polycarboxylic acids, the esters of aliphatic or aromatic acids in general containing from 2 to 20 carbon atoms, particularly mono and polyesters of saturated and unsaturated polycarboxylic acids, esters of aromatic hydroxyacids and in

general the esters described in European published applications No. 45976 and 45977 in the name of the Applicant. Examples of specific esters are methyl-, or ethyl-, butyl, octylacetate, ethyl- or ethyl phenylbutyrate, ethyl-valerianate, phenylpropionate, mono and diethylsuccinate, methyl- or ethyl-, propyl- or octylbenzoate, ethyl-p.toluate, ethyl-p.anisate, diethyldiisobutylmalonate, diethyl-n.butylmalonate, diethyl-phenylmalonate, diisobutyl-adipate, dioctylsebacate, alkylmaleates, alkyl-aryl-maleates, alkyl- or aryl-alkylpivalates, alkyl-acrylates and methacrylates, phtalates as isobutyl-, diisobutyl-, or dioctyl- or neopentylphtalate, diethyl-phtalate, diphenylphtalate, benzyl-butylphtalate, diphenylcarbonate, ethyl- diphenylacetate, isobutylbenzoylacetate, 1,2-dihydroxy-diacetate- benzene, diisobutyl-2, 3-naphtalene-dicarboxylate. Suitable compounds are also orthoesters as for example triethyl orthobenzoate.

Specific examples of suitable ethers are diethylether, dibutylether, diisoamylether, dioctylether, dioxane, trioxane, tetrahydrofuran, ethylene glycol-dimethyl-ether, and hindered ethers as methyl-cumyl-ether.

Examples of other suitable electron-donor compounds are propylene oxyde, epichlorhydrin, benzophenone, phosphites, as triphenylphosphite, triphenylphosphine, $POCl_3$, alpha-methyl-alpha- phenylacetyl-chloride, benzoyl chloride, bromide and iodide, toluyl chloride, butyrolactone, and in general all the electron-donor compounds cited in European patent applications No. 8647, 86472 and 86473 all in the name of the Applicant.

Examples of silicon compounds are: (ethyl)Si $(OEt)_3$, (phenyl)Si $(OEt)_3$, (propyl)Si $(OEt)_3$, (butyl)Si $(OEt)_3$, (isopropyl)Si $(OEt)_3$, (isobutyl)Si $(OEt)_3$, (sec-butyl)$_2$Si $(OEt)_2$, (tert-butyl)Si $(OEt)_3$, (tolyl)Si $(OEt)_3$, (cyclohexyl)Si $(OEt)_3$, (chlorophenyl)Si $(OEt)_3$, (chloroethyl)Si $(OEt)_3$, (trifluoropropyl)Si $(OEt)_3$, (neopentyl)Si $(OEt)_3$, (cyclohexyl)Si $(OCH_3)_3$, (decyl)Si $(OCH_3)_3$, (octyl)Si $(OCH_3)_3$, (phenyl)Si $(OCH_3)_3$, (tert-butyl)$_2$ Si $(OCH_3)_2$, (cyclohexyl)$_2$ Si $(OCH_3)_2$, (tolyl)$_2$Si $(OCH_3)_2$, (isopropyl)2 Si $(OCH_3)_2$, (cyclohexyl)$CH_3$Si $(OCH_3)_2$, (tert-butyl)$CH_3$Si $(OCH_3)_2$, (trifluoropropyl)$CH_3$Si $(OCH_3)_2$, (isopropyl)$CH_3$ Si$(OCH_3)_2$, (sec-butyl)$CH_3$Si $(OCH_3)_2$, n-butyl($CH_3$)Si $(OCH_3)_2$, n-octyl($CH_3$)Si $(OCH_3)_2$, phenyl($CH_3$)Sim $(OCH_3)_2$, (sec-butyl)$_2$Si $(OCH_3)_2$, (trifluoropropyl)$_2$Si $(OCH_3)_2$, (phenyl)ClSi $(OCH_3)_2$, (ethyl)Si $(isoC_3H_7)_3$ ClSi$(OEt)_3$, $CH_2=CH$-Si$(OEt)_3$, (phenyl)$_3$ Si $OCH_3$, Si$(OCH_3)_4$.

Examples of heterocyclic compounds containing at least a nitrogen atom are 2,2,5,6 tetramethyl piperidine and 2,6 diisopropyl piperidine.

The active anhydrous Mg dihalides forming the essential support of the solid component show an X-rays powder spectrum in which the most intense diffraction line which appears in the spectrum of the normal not activated Mg dihalide is replaced by a halo the intensity peak of which is shifted with respect to the interplanar distance of the most intense line. From these Mg dihalides it is possible to obtain by heat-treatment in inert hydrocarbon solvents, forms showing in the X-rays powder spectrum a broadening of the most intense diffraction line in place of the halo. The above forms are included within the active forms of Mg dihalides suitable to obtain the catalysts of the present invention.

Generally, the surface area of the active forms is higher than 30-40 $m^2/g$ and is comprised in particular between 100-300 $m^2/g$.

Preferred Mg dihalides are Mg dichloride and Mg dibromide. The content in water in the dihalides is generally less than 1% by weight.

The solid component used in the reaction with compound AH is prepared according to various methods, one of which, and also one of the preferred methods, consists in co-milling the Mg dihalide, the Ti halide or Ti haloalcoholate and the electron-donor compound when it is used, until appearance in the X-rays spectrum of the milled product of the modifications above set forth for the spectrum of the Mg dihalide and in heat-treating the milled product in suspension in a halogenated hydrocarbon as, e.g., 1,2 dichloroethane. separating the solid product and washing it with heptane or a similar hydrocarbon solvent. The duration of the treatment is generally comprised between 1 and 4 hours and depends on the temperature of treatment.

According to another method, an adduct between a Mg dihalide and an alcohol is reacted with $TiCl_4$. The above methods are described in Belgian patent 868,682 and published German patent application No. 3,022,738.

Other known methods which lead to the formation of Mg dihalide in active form or to Ti-containing Mg dihalide supported components, in which the dihalide is present in active form, are based on the following reactions:

reaction of a Grignard reagent or a $MgR_2$ compound (R being a hydrocarbyl radical) or complexes of said $MgR_2$ compounds with Al trialkyls, with halogenating agents as $AlX_3$ or $AlR_mX_n$ compounds (X is halogen, R is a hydrocarbyl, $m + n = 3$, $SiCl_4$ or $HSiCl_3$;

reaction of a Grignard reagent with a silanol or polysiloxane, $H_2O$ or with an alcohol and further reaction with a halogenating agent, or with $TiCl_4$;

reaction of Mg with an alcohol and halogenhydric acid, or of Mg with a hydrocarbyl halide and an alcohol;

reaction of MgO with $Cl_2$ or $AlCl_3$;
reaction of $MgX_2.nH_2O$ (X = halogen) with a halogenating agent or $TiCl_4$;
reaction of Mg mono or dialcoholates or Mg carboxylates with a halogenating agent.

The Al-alkyl compound a) is preferably an Al-trialkyl as Al-triethyl, Al-triisobutyl, and Al-tri-n-butyl.

It can also be a linear or cyclic compound containing one or more Al atoms bound to each other through oxygen atoms or other hetero atoms as:

$(C_2H_5)_2Al-O-Al(C_2H_5)_2$,

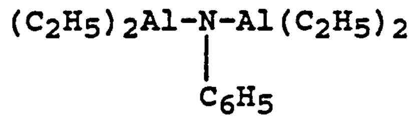
,

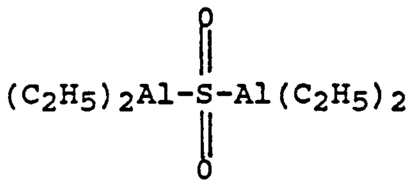

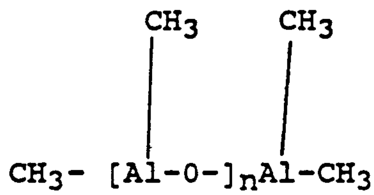

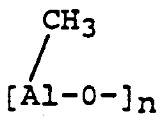

where n is an integer ranging from 1 to 20. Compounds having general formula $AlR_2OR'$ can be also employed, where R' is an aromatic radical substituted in position 2 and/or 6 and R is an alkyl radical containing from 1 to 8 carbon atoms.

The Al-Alkyl compounds may be employed in mixture with Al-Alkyl halides, as $AlEt_2Cl$.

As electron donor compound c) the compound employable in the preparation of the solid catalyst component a) are suitable.

As already indicated, the catalysts of the present invention are useful in polymerization of alpha olefins having formula $R\text{-}CH=CH_2$, where R is an alkyl or aryl group containing from 1 to 8 carbon atoms, in particularly propylene, 1-butene, 4-methyl-1-pentene, and mixtures thereof, and/or with ethylene.

The polymerization is carried out according to known methods, by operating in a liquid phase, either in the presence of absence of an inert hydrocarbon solvent, or in gas phase, or by combining a liquid phase polymerization step with a step in gas phase.

In general the temperature is comprised between 40 ° C and 160 ° C, but preferably between 60 ° and 90 ° C operating either at atmospheric or at greater than atmospheric pressure.

As a molecular weight regulator, hydrogen or other regulators are used.

The catalyst may be precontacted with little amounts of olefins (prepolymerization), particularly in order to improve the morphology of polymer.

The prepolymerization is carried out by feeding the olefin in a suspension of the solid catalytic component in an inert hydrocarbon solvent containing in solution the Al-alkyl compound and optionally the electron donor compound.

The amount of polymer produced in the prepolymerization step is preferably comprised between 0.5 and 3 times the weight of the solid catalyst component.

The following examples, are given for illustrative purpose and not limitative of the invention.

EXAMPLE 1

(A) Preparation of the solid catalytic component.

4.0 grams of the solid catalytic component prepared according to example 8 of European published patent application No. 45977 are suspended in 30 ml of 1-2 dichloroethane (DCE). During 10 minutes, a solution of

0.50 ml of n-butyl alcohol in 10 ml of DCE is added dropwise to the suspension. The temperature is raised to 80 ° C and the reaction is performed during 2 hours. 0.5 ml of the suspension so obtained are employed in the polymerization test of propylene.

(B) Polymerization of propylene.

Into a 2 liters stainless steel autoclave, there are introduced, at 50 ° C, a suspension containing 3,5 millimoles of $Al(C_2H_5)_3$ and 0.175 millimoles of phenyltriethoxysilane in 25 ml of n-heptane, and 0.5 ml of the suspension prepared according to the method described in (A) under propylene flow. Then the autoclave is closed and an overpressure of 0.1 atm of $H_2$ is introduced, 400 g of propylene are injected and the temperature is raised to 70 ° C. The polymerization is carried out for 2 hours, then the residual monomer is removed and the polymer is isolated. The results of the polymerization tests are reported in Table 2.

EXAMPLE 2

Example 1 is repeated employing in the preparation (A) a higher amount of n-butyl alcohol. The amount of reagents employed and the results of the polymerization tests are reported in Tables 1 and 2.

EXAMPLES 3-13

Example 1 is repeated but changing the reaction medium and the compound AH in the preparation (A) (Table 1). The results of the polymerization tests are reported in Table 1.

EXAMPLE 1 (comparative)

Example 1 is repeated, but employing as reaction medium n-hexane in the preparation (A). The results of the polymerization tests are reported in Table 2.

EXAMPLE 2 (comparative)

Example 1 is repeated, but employing the solid catalytic component prepared according to example 8 of European patent application No. 4977, i.e. omitting the treatment with butyl alcohol in DCE.

| TABLE 1 | | | | |
|---|---|---|---|---|
| Preparation of the catalytic component (1) | | | | |
| Example N° | AH | | Reaction medium | |
| | Type | Mg/AH (molar ratio) | Type | Dielectric constant |
| 1 | n-butyl alcohol | 5 | 1-2 dichloro ethane | 10,6 |
| 2 | " | 10 | " | |
| 3 | Ethanol | 5 | " | |
| 4 | Isobutane | 10 | " | |
| 5 | BHT[1] | 5 | " | |
| 6 | " | 10 | " | |
| 7 | Ethylene glycol | 5 | " | |
| 8 | " | 10 | " | |
| 9 | Trifluoro ethanol | 20 | " | |
| 10 | Trifluoromethane-sulfonic acid | 20 | " | |
| 11 | n-butyl alcohol | 5 | O.dichloro benzene | 9,9 |
| 12 | " | " | Chlorobenzene | 5,7 |
| 13 | " | " | Benzyl chloride | 7,0 |
| 1 Cfr | n butyl alcohol | 5 | n-hexane | 1,89 |
| 2 " | — | - | — | - |

(1) BHT = 2,6 di tert-butyl p. cresol

TABLE 2

| Polymerization runs | | | | | |
|---|---|---|---|---|---|
| Suspension prepared according to example Nº | Ti content of the polymer (p.p.m) | II % | MFI (g/10') | G.P.C. $\frac{MW}{Mn}$ | Poured density (g/cc.) |
| 1 | 10 | 96,8 | 55 | 4 | 0,42 |
| 2 | 8,5 | 95,1 | 37 | 3,6 | 0,44 |
| 3 | 11 | 95,9 | 47 | 3,6 | 0,43 |
| 4 | 9 | 94,8 | 53 | 3,7 | 0,44 |
| 5 | 7 | 92,9 | 39 | 3,9 | 0,45 |
| 6 | 6 | 92,9 | 41 | 3,9 | 0,47 |
| 7 | 14 | 92,6 | 48 | 3,6 | 0,42 |
| 8 | 12 | 91,4 | 45 | 3,7 | 0,44 |
| 9 | 10 | 89,4 | 30 | 4 | 0,42 |
| 10 | 9 | 89,4 | 25 | 4 | 0,40 |
| 11 | 12 | 92,7 | 55 | 4,05 | 0,40 |
| 12 | 13 | 93,5 | 49 | 3,7 | 0,41 |
| 13 | 12 | 92 | 46 | 3,7 | 0,41 |
| 1 CFR | 6 | 91,1 | 30 | 5,1 | 0,42 |
| 2 CFR | 4,6 | 95,8 | 35 | 4,6 | 0,44 |
| I.I. = isotacticity index, corresponding to the % of polymer soluble in boiling n- heptane. | | | | | |

**Claims**

**Claims for the following Contracting States : AT, BE, DE, FR, GB, IT, NL, SE**

**1.** A catalyst component suitable for the (co)polymerization of alpha-olefins to stereoregular polymers having a narrow molecular weight distribution, obtained by reacting a solid component of catalysts suitable for the stereoregular polymerization of alpha olefins, comprising a Ti compound having at least a Ti-halogen bond, and optionally an electron donor compound, supported on an anhydrous Mg halide in active form, with a compound (AH) containing at least an active hydrogen atom, used in amounts corresponding to ratios Mg/moles of compound AH comprised between 2 and 30, in a liquid medium, not reactive towards the solid component, having a dieletric constant, measured at 20 ° C, higher than 2.

**2.** The catalyst component according to claim 1 comprising an electron donor compound.

**3.** The catalyst component according to claim 1 in which the compound AH is chosen from the group of the aliphatic alcohols, cycloaliphatic alcohols, phenols and naphtols.

**4.** A catalyst suitable for the preparation of homopolymers and copolymers of alpha-olefins having a narrow molecular weight distribution, comprising the product of the reaction of:
a) a catalyst component according to one or more of claims 1,2 and 3;
b) an Al-alkyl compound.
c) an electron-donor compound;

**5.** The catalyst according to claim 4, in which the Al-alkyl compound is an Al-trialkyl compound.

**6.** A process for the (co)polymerization of alpha-olefins to stereoregular polymers having a narrow molecular weight distribution characterised in that it is carried out in the presence of a catalyst according to anyone of claims 4 or 5.

**Claims for the following Contracting State : ES**

**1.** A process for preparing a solid component of catalysts suitable for the polymerization of $\alpha$-olefins to stereoregular polymers having a narrow molecular weight distribution, comprising the reaction among a

Ti compound, having at least a Ti-halogen bond, supported on an anhydrous Mg halide in active form, and a compound (AH), containing at least an active hydrogen atom, used in amounts corresponding to ratios Mg/moles of compound AH comprised between 2 and 30; said reaction being carried out in a liquid medium, not reactive towards the solid component, having a dielectric constant, measured at 20 ° C, higher than 2.

**2.** The process according to claim 1 wherein the reaction mixture comprises an electron donor compound.

**3.** The process according to claim 1 in which the compound AH is chosen from the group of the aliphatic alcohols, cycloaliphatic alcohols, phenols and naphtols.

**4.** A process for preparing a catalyst suitable for the preparation of homopolymers and copolymers of α-olefins having a narrow molecular weight distribution, comprising the product of reaction of :
a) a catalyst component according to one or more of claims 1, 2 and 3;
b) an Al-alkyl compound; and
c) an electron donor compound.

**5.** The process according to the claim 4, in which the Al-alkyl compound is an Al-trialkyl compound.

**6.** Process for the (co)polymerziation of alpha-olefins to stereoregular polymers having a narrow molecular weight distribution characterised in that it is carried out in the presence of a catalyst which is prepared according to the process of anyone of claims 4 or 5.

**Revendications**
**Revendications pour les Etats contractants suivants : AT, BE, DE, FR, GB, IT, NL, SE**

**1.** Un composant catalytique approprié pour la (co)polymérisation d'alpha-oléfines en polymères stéréoréguliers ayant une distribution de poids moléculaire étroite, obtenu par réaction d'un composant solide de catalyseur convenant pour la polymérisation stéréorégulière d'alpha-oléfines, comprenant un composé de titane ayant au moins deux liaisons Ti-halogène, et éventuellement un composé électro-donneur, supporté sur un halogénure de Mg anhydre sous forme active, et d'un composé (AH) contenant au moins un atome d'hydrogène actif, utilisant des quantités correspondant à des ratios Mg/moles de composé AH comprises entre 2 et 30, dans un milieu liquide, non réactif vis-à-vis du composant solide, et dont la constante diélectrique, mesurée à 20 ° C, est supérieure à 2.

**2.** Le composant catalytique selon la revendication 1, comprenant un composé électrodonneur.

**3.** Le composant catalytique selon la revendication 1, dont le composé AH est choisi dans le groupe des alcools aliphatiques, des alcools cycloaliphatiques, des phénols et des naphtols.

**4.** Un catalyseur approprié pour la préparation d'homopolymères et de copolymères d'alpha-oléfines ayant une distribution de poids moléculaires étroite, comprenant le produit de la réaction de:
a) un composant catalytique selon l'une ou plusieurs des revendications 1, 2 et 3;
b) un composé d'Al-alkyle;
c) un composé électrodonneur.

**5.** Le catalyseur selon la revendication 4, dans lequel le composé d'Al-alkyle est le composé d'Al-trialkyle.

**6.** Un procédé de (co)polymérisation d'alphaoléfines en polymères stéréoréguliers ayant une distribution de poids moléculaires étroite, caractérisé en ce qu'il est mis en oeuvre en présence d'un catalyseur selon l'une quelconque des revendications 4 ou 5.

**Revendications pour l'Etat contractant suivant : ES**

**1.** Un procédé de préparation d'un composant solide de catalyseurs appropriés pour la polymérisation d'alphaoléfines en polymères stéréoréguliers ayant une distribution de poids moléculaire étroite, comprenant la réaction d'un composé de titane ayant au moins une liaison Ti-halogène, supporté sur un halogénure de Mg anhydre sous forme active, et d'un composé AH contenant au moins un atome

d'hydrogène actif, utilisé en des quantités correspondant à des ratios Mg/moles de composé AH comprises entre 2 et 30, ladite réaction étant mise en oeuvre dans un milieu liquide, non réactif vis-à-vis du composant solide, et dont la constante diélectrique, mesurée à 20 °C, est supérieure à 2.

**2.** Le procédé selon la revendication 1, dans lequel le composé de réaction comprend un composé électrodonneur.

**3.** Le procédé selon la revendication 1, dans lequel le composé AH est choisi dans le groupe des alcools aliphatiques, des alcools cycloaliphatiques, des phénols et des naphtols.

**4.** Un procédé de préparation d'un catalyseur approprié pour la préparation d'homopolymères et de copolymères d'alpha-oléfines ayant une distribution de poids moléculaires étroite, comprenant le produit de la réaction de:
a) un composant de catalyseur selon l'une ou plusieurs des revendications 1, 2 et 3;
b) un composé d'Al-alkyle; et
c) un composé électrodonneur.

**5.** Le procédé selon la revendication 4, dans lequel le composé d'Al-alkyle est un composé d'Al-trialkyle.

**6.** Le procédé de (co)polymérisation d'alphaoléfines en polymères stéréoréguliers ayant une distribution de poids moléculaires étroite, caractérisé en ce qu'il est mis en oeuvre en présence d'un catalyseur qui est préparé selon le procédé selon l'une quelconque des revendications 4 ou 5.

**Patentansprüche**
**Patentansprüche für folgende Vertragsstaaten : AT, BE, DE, FR, GB, IT, NL, SE**

**1.** Katalysatorkomponente, geeignet für die (Co)Polymerisation von $\alpha$-Olefinen zu stereoregulären Polymeren mit einer engen Molekulargewichtsverteilung, erhalten durch Umsetzung einer festen Katalysatorkomponente, geeignet für die stereoreguläre Polymerisation von $\alpha$-Olefinen, umfassend eine Ti-Verbindung mit zumindest einer Ti-Halogen-Bindung und gegebenenfalls eine Elektronen-Donor-Verbindung, aufgebracht auf einem wasserfreien Mg-halogenid in aktiver Form, mit einer Verbindung (AH), die zumindest ein aktives Wasserstoffatom enthält und in Mengen entsprechend Verhältnissen Mg/Mol Verbindung AH zwischen 2 und 30 verwendet wird, in einem flüssigen, gegenüber der festen Komponente nicht reaktiven Medium mit einer dielektrischen Konstante, gemessen bei 20 °C, von höher als 2.

**2.** Katalysatorkomponente gemäß Anspruch 1, umfassend eine Elektronen-Donor-Verbindung.

**3.** Katalysatorkomponente gemäß Anspruch 1, worin die Verbindung AH aus der Gruppe der aliphatischen Alkohole, cycloaliphatischen Alkohole, Phenole und Naphthole ausgewählt wird.

**4.** Katalysator, der für die Herstellung von Homopolymeren und Copolymeren von $\alpha$-Olefinen mit einer engen Molekulargewichtsverteilung geeignet ist, umfassend das Reaktionsprodukt von
(a) einer Katalysatorkomponente gemäß einem oder mehreren der Ansprüche 1, 2 und 3;
(b) einer Al-alkyl-Verbindung;
(c) einer Elektronen- Donor-Verbindung.

**5.** Katalysator gemäß Anspruch 4, worin die Al-alkyl-Verbindung eine Al-trialkyl-Verbindung ist.

**6.** Verfahren zur (Co)Polymerisation von $\alpha$-Olefinen zu stereoregulären Polymeren mit einer engen Molekulargewichtsverteilung, dadurch gekennzeichnet, daß sie in Anwesenheit eines Katalysators gemäß einem der Ansprüche 4 oder 5 durchgeführt wird.

**Patentansprüche für folgenden Vertragsstaat : ES**

**1.** Verfahren zur Herstellung einer festen Katalysatorkomponente, geeignet zur Polymerisation von $\alpha$-Olefinen zu stereoregulären Polymeren mit einer engen Molekulargewichtsverteilung, umfassend die Umsetzung zwischen einer Ti-Verbindung mit zumindest einer Ti-Halogen-Bindung, aufgebracht auf

einem wasserfreien Magnesiumhalogenid in aktiver Form, und einer Verbindung (AH), die zumindest ein aktives Wasserstoffatom enthält und in Mengen entsprechend den Verhältnissen Mg/Mol der Verbindung AH zwischen 2 und 30 verwendet wird, wobei die Reaktion in einem flüssigen, gegenüber der festen Komponente nicht reaktiven Medium mit einer dielektrischen Konstante, gemessen bei 20 ° C,von höher als 2 durchgeführt wird.

**2.** Verfahren gemäß Anspruch 1, worin die Reaktionsmischung eine Elektronen-Donor-Verbindung umfaßt.

**3.** Verfahren gemäß Anspruch 1, worin die Verbindung AH aus der Gruppe der aliphatischen Alkohole, cycloaliphatischen Alkohole, Phenole und Naphthole ausgewählt wird.

**4.** Verfahren zur Herstellung eines Katalysators, der für die Herstellung von Homopolymeren und Copolymeren von $\alpha$-Olefinen mit einer engen Molekulargewichtsverteilung geeignet ist, umfassend das Reaktionsprodukt von
(a) einer Katalysatorkomponente gemäß einem oder mehreren der Ansprüche 1, 2 und 3;
(b) einer Al-alkyl-Verbindung; und
(c) einer Elektronen-Donor-Verbindung.

**5.** Verfahren gemäß Anspruch 4, worin die Al-alkyl-Verbindung eine Al-trialkyl-Verbindung ist.

**6.** Verfahren zur (Co)Polymerisation von $\alpha$-Olefinen zu stereoregulären Polymeren mit einer engen Molekulargewichtsverteilung, dadurch gekennzeichnet, daß sie in Gegenwart eines Katalysators durchgeführt wird, der gemäß dem Verfahren von einem der Ansprüche 4 oder 5 hergestellt ist.